(19)

**Europäisches Patentamt**
**European Patent Office**
**Office européen des brevets**

(11) **EP 4 768 433 A1**

(12) **EUROPEAN PATENT APPLICATION**

(43) Date of publication:
**01.07.2026 Bulletin 2026/27**

(21) Application number: **25161087.9**

(22) Date of filing: **28.02.2025**

(51) International Patent Classification (IPC):
**C01B 32/05** (2017.01)    **C01B 32/21** (2017.01)
**H01M 4/583** (2010.01)    **H01M 4/587** (2010.01)
**H01M 10/0525** (2010.01)

(52) Cooperative Patent Classification (CPC):
**C01B 32/21; C01B 32/05; H01M 4/366;**
**H01M 4/583; H01M 4/587; H01M 10/0525;**
C01P 2006/40; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.12.2024 TW 113150852**

(71) Applicant: **CPC Corporation, Taiwan**
**Kaohsiung City 81126 (TW)**

(72) Inventors:
 • **Chen, Yan-Shi**
  **Taiwan (TW)**
 • **Lai, Chia-Min**
  **Taiwan (TW)**

(74) Representative: **Perani & Partners S.p.A.**
**Corso Europa, 15**
**20122 Milano (IT)**

(54) **METHOD FOR MANUFACTURING A HIGH-SAFETY CARBON MATERIAL**

(57)     A method for manufacturing a high-safety carbon material includes: step (A), mixing a carbon material, a coating material, glutaraldehyde and a solution with a weight ratio of 100:2-6:0.2-0.6:100-300 to form a mixed slurry, wherein the carbon material is soft carbon and/or artificial graphite, and the coating material is chitosan and/or sulfonated chitosan; step (B), stirring the mixed slurry evenly and heating at 70°C-90°C to form an evaporated slurry; step (C), heating the evaporated slurry at 70°C-90°C for 24 hours or more, and then cooling to room temperature to form a high-safety carbon material. The method is helpful to obtain a high-safety carbon material, which can slow down a large amount of heat release when a solid-state electrolyte interface decomposes, prevent the heat generated by the decomposition of the solid-state electrolyte interface from triggering the overall thermal runaway mechanism, and can improve the safety of anode materials used in batteries.

mixing a carbon material, a coating material, glutaraldehyde and a solution with a weight ratio of 100:2-6:0.2-0.6:100-300 to form a mixed slurry, wherein the carbon material is soft carbon and/or artificial graphite, and the coating material is chitosan and/or sulfonated chitosan — A

↓

stirring the mixed slurry evenly and heating at 70°C-90°C to form an evaporated slurry — B

↓

heating the evaporated slurry at 70°C-90°C for 24 hours or more, and then cooling to room temperature to form a high-safety carbon material — C

FIG. 1

**Description**

BACKGROUND OF THE INVENTION

1. Field of the Invention

The present disclosure relates to a method for manufacturing a high-safety carbon material.

2. Description of the Related Art

In recent years, carbon materials such as soft carbon and artificial graphite have become attractive battery materials because of their high electric capacity and long calendar life, especially as anode materials for lithium-ion batteries.

Next, during the first charge and discharge of the lithium-ion battery, the electrode material reacts with the electrolyte at the solid-liquid interface to form a passivation layer with solid electrolyte characteristics, commonly known as the solid electrolyte interface (SEI) film (abbreviated as SEI film), which makes an important contribution to improving the cycle life of the battery.

BRIEF SUMMARY OF THE INVENTION

On the other hand, in the process of developing high-energy or high-capacity lithium-ion batteries, the safety of the battery during use is an issue that cannot be ignored. When the battery catches fire, burns or explodes, it is theoretically called thermal runaway, which will seriously affect the safety of the battery during use.

Generally speaking, thermal runaway is when the battery generates abnormally heat during the charge and discharge process because of open circuit, short circuit or electrical imbalance (referring to too low electric capacity or too high internal resistance). Once the battery exceeds the critical temperature of thermal runaway reaction (generally around 150°C), the materials inside the battery will gradually undergo exothermic reactions of thermal decomposition. **In** particular, once thermal decomposition occurs in the SEI film, it will cause the SEI film to decompose and generate a large amount of heat release, thereby triggering the overall thermal runaway mechanism.

Therefore, there is still room for improvement in terms of how to slow down the massive heat release during the decomposition of the SEI film, prevent the heat generated by the decomposition of the SEI film from triggering the overall thermal runaway mechanism, and then improve the safety of anode materials used in batteries.

Next, the present inventors found that by adding chitosan or sulfonated chitosan as a polymer coating material, it is conducive to coating a designed and commercialized artificial solid electrolyte (A-SEI) film (abbreviated as A-SEI film) on the surface of the carbon material, and then a high-safety carbon material can be obtained. The high-safety carbon material helps to improve the quick charge capacity capability and the cycle life (electric capacity retention rate) of the lithium-ion battery under quick charge, and can also slow down a large amount of heat release when the SEI film decomposes, prevent the heat generated by the decomposition of the SEI film from triggering the overall thermal runaway mechanism, and can improve the safety of anode materials used in batteries, thereby completing the present disclosure.

Specifically, in order to solve the above-mentioned problem, a method for manufacturing a high-safety carbon material of an aspect of the present disclosure includes: step (A), mixing a carbon material, a coating material, glutaraldehyde and a solution with a weight ratio of 100:2-6:0.2-0.6:100-300 to form a mixed slurry, wherein the carbon material is soft carbon and/or artificial graphite, and the coating material is chitosan and/or sulfonated chitosan; step (B), stirring the mixed slurry evenly and heating at 70°C-90°C to form an evaporated slurry; step (C), heating the evaporated slurry at 70°C-90°C for 24 hours or more, and then cooling to room temperature to form a high-safety carbon material.

In one embodiment, after the step (C), step (D) is further included, the step (D) is to sieve the high-safety carbon material through a sieve of 38 microns or less and obtain undersize.

In one embodiment, compared to the carbon material, the high-safety carbon material has an electric capacity retention rate increased by 40% or more after 120 times of 5C charge-discharge cycle.

In one embodiment, the high-safety carbon material has a heat release amount of SEI exothermic peak less than 7.5J/g after 120 times of 5C charge-discharge cycle.

In one embodiment, the high-safety carbon material obtained by using sulfonated chitosan for step (A) has a heat release amount of SEI exothermic peak less than 5.5 J/g after 120 times of 5C charge-discharge cycle.

In one embodiment, compared to the carbon material, the high-safety carbon material has a quick charge capacity capability under the quick charge condition of 2C increased by 3% or more, and under the quick charge condition of 5C increased by 3% or more.

In one embodiment, the high-safety carbon material has accumulated irreversible efficiency (AIE) less than 88.5% after 200 times of 0.3C charge-discharge cycle.

In one embodiment, compared to the carbon material, the high-safety carbon material has an electric capacity retention rate increased by 2% or more after 100 times of 0.3C charge-discharge cycle.

In one embodiment, under the conditions that a needle diameter is 3 mm, a penetration speed is 8 cm/min, and a minimum depth of penetration is penetrating the cell, the test of SAE J2464 standard method is carried out, and a pouch battery with an electric capacity of 1Ah, composed of a cathode made of $LiNi_{0.8}Mn_{0.1}Co_{0.1}O_2$, an anode made of the high-safety carbon material can pass the penetration test.

In one embodiment, in the step (A), the solution is water or water containing 2vol% acetic acid.

An aspect of the present disclosure is completed in view of the above-mentioned problem point of prior art, and the object is to provide a method for manufacturing a high-safety carbon material, which can improve the safety of anode materials used in batteries. Specifically, by adding chitosan and/or sulfonated chitosan as a polymer coating material, it is beneficial to coat a layer of A-SEI film on the surface of carbon material, which helps to slow down a large amount of heat release during the decomposition of SEI film, prevents the heat generated by SEI film decomposition from triggering the overall thermal runaway mechanism, and can improve the safety of anode materials used in batteries.

BRIEF DESCRIPTION OF THE DRAWINGS

FIG. 1 is a flow chart of a method for manufacturing a high-safety carbon material of the present disclosure.
FIG. 2 shows a photo of Control example 1 after the penetration test for 10 seconds.
FIG. 3 shows a photo of Experiment example 1 after the penetration test for 18 seconds.

DETAILED DESCRIPTION OF THE INVENTION

The implementation of the present disclosure is illustrated by the specific embodiments as follows, so one skilled in the art may understand other advantages and effects of the present disclosure by the contents disclosed in the specification. The present disclosure may also be implemented or applied by other embodiments, and the details in the specification may also be modified and varied based on different views and applications without departing from the spirit of the present disclosure.

Unless otherwise specified herein, the term "A-B" used in the specification and the claims attached includes the meaning of "A or more and B or less". For example, the term "10-40wt%" includes the meaning of "10wt% or more and 40wt% or less".

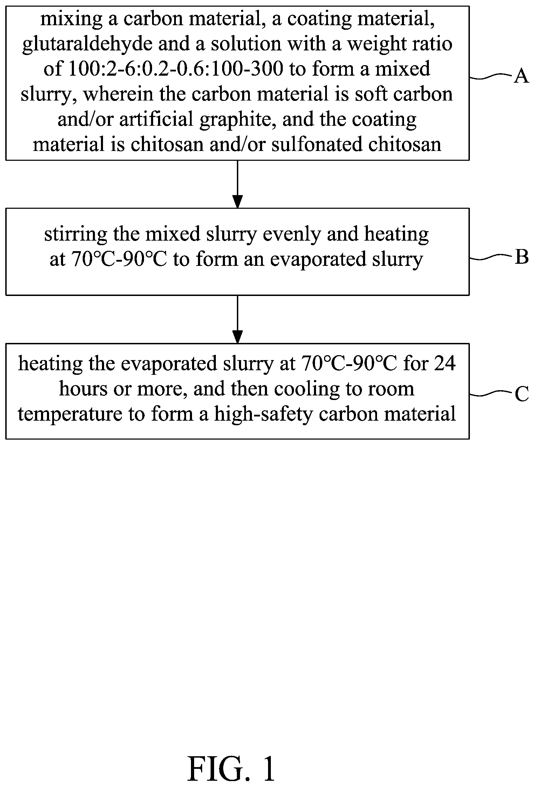

First, referring to FIG. 1, FIG. 1 is a flow chart of a method for manufacturing a high-safety carbon material according to the present disclosure. As shown in FIG. 1, the method for manufacturing a high-safety carbon material according to the present disclosure includes: step (A)-step (C). Also, in one embodiment, step (D) may be further included after step (C) as necessary. Each step is described in detail below.

[Step (A)]

Step (A) is to mix a carbon material, a coating material, glutaraldehyde and a solution with a weight ratio of 100:2-6:0.2-0.6:100-300 to form a mixed slurry. Among them, the carbon material may be granular soft carbon and/or artificial graphite; the coating material may be chitosan and/or sulfonated chitosan, and chitosan and sulfonated chitosan are a kind of polymer with excellent thermal stability, and the sulfonate formed after sulfonation will help the transfer of lithium ions, together with the use of glutaraldehyde (GA) as a cross-linking agent, which can make chitosan or sulfonated chitosan cross-link with glutaraldehyde to form a stable polymer artificial solid electrolyte interface (A-SEI) film covering the carbon material.

In some embodiments, the weight ratio of the carbon material:chitosan:glutaraldehyde:the solution may be 100:2:0.2:100 or 100:4:0.4:100 or 100:6:0.6:100, etc. On the other hand, in some embodiments, the weight ratio of the carbon material: sulfonated chitosan:glutaraldehyde:the solution may be 100:2:0.2:300 or 100:4:0.4:300, etc. Also, from the point of view of easy homogeneous mixing, the weight ratio of the carbon material to the solution (the carbon material:the solution) is preferably between 1:1 and 1:3.

Next, the solution may be water or water containing 2vol% acetic acid. Also, the carbon material, chitosan, sulfonated chitosan, glutaraldehyde and the solution can all use commercially available materials, such as soft carbon produced by CPC corporation or artificial graphite (trade name MGP) purchased from China Steel Chemical Corporation, which are not particularly limited. Through step (A), the carbon material can be evenly dispersed in the solution, and through the subsequent steps, the chitosan or sulfonated chitosan can cross-link with glutaraldehyde to form an A-SEI film covering carbon material.

[Step (B)]

Step (B) is to stir the mixed slurry obtained in step (A) evenly and heat at 70°C-90°C to form an evaporated slurry. Specifically, step (B) may be to place the mixed slurry obtained in step (A) into a round-bottom flask, place it on a heating plate, stir it evenly at a rotation speed of 300rpm, and heat it at 80°C until the slurry is completely evaporated (removing the solution) to form an evaporated slurry. Through step (B), it can be suitable to make the chitosan or sulfonated chitosan to coat the carbon material.

[Step (C)]

Step (C) is to heat the evaporated slurry obtained in step (B) at 70°C-90°C for 24 hours or more, and then cool it to room temperature to form a high-safety carbon material. Specifically, step (C) may be to take out the carbon material (evaporated slurry) covered with chitosan or sulfonated chitosan from the round-bottom flask, and then put it into a vacuum oven, and dry it at 80°C for 24 hours (or raise the temperature to 80°C at 10°C per minute for 24 hours in a horizontal furnace with nitrogen gas), in order to carry out the cross-linking reaction of chitosan or sulfonated chitosan with glutaraldehyde, and then cool it to room temperature (either naturally cooling or carrying out cooling measures to cool down) to form an A-SEI film covering the carbon material, thereby obtaining a high-safety carbon material. Through step (C), chitosan or sulfonated chitosan and glutaraldehyde can cross-link to form a high-safety carbon material with a stable A-SEI film on the carbon material.

[Step (D)]

Step (D) is an optional step, which is used to screen out a high-safety carbon material with the appropriate particle size for subsequent applications as anode materials. Specifically, step (D) may be to sieve the high-safety carbon material through a sieve of 38 microns (400 mesh) or less and obtain undersize.

(Embodiments)

Below, although the present disclosure is specified by various embodiments and comparative examples, the present disclosure is not limited to those embodiments and comparative examples.

<Preparation of high-safety carbon materials>

<Preparation example 1>

Based on the above steps (A) to (C), the high-safety carbon material 1 of Preparation example 1 is obtained. Among them, in step (A), the weight ratio of soft carbon:chitosan:glutaraldehyde:the solution is 100:2:0.2:100. Also, soft carbon uses the PPSC series of soft carbon purchased from Taiwan CPC corporation; chitosan uses the product number 419419 purchased from SIGMA-ALDRICH; glutaraldehyde uses the product number 49629 purchased from SIGMA-ALDRICH; the solution uses water containing 2vol% acetic acid.

<Preparation examples 2-3>

Except for adjusting the weight ratio of soft carbon: chitosan:glutaraldehyde: the solution to 100:4:0.4:100 and 100:6:0.6:100 respectively, the high-safety carbon materials 2-3 are obtained in the same way as Preparation example 1.

<Preparation example 4>

Based on the above steps (A) to (C), the high-safety carbon material 4 of Preparation example 4 is obtained. Among them, in step (A), the weight ratio of soft carbon:sulfonated chitosan:glutaraldehyde:the solution is 100:2:0.2:300. Also, soft carbon uses the PPSC series of soft carbon purchased from Taiwan CPC corporation; sulfonated chitosan is further synthesized in-house using chitosan (product number 419419) purchased from SIGMA-ALDRICH; glutaraldehyde uses the product number 49629 purchased from SIGMA-ALDRICH; the solution uses water.

<Preparation example 5>

Except for adjusting the weight ratio of soft carbon: sulfonated chitosan:glutaraldehyde:the solution to 100:4:0.4:300, the high-safety carbon material 5 is obtained in the same way as Preparation example 4.

<Reference example 1>

Soft carbon is used as carbon material A of Reference example 1.

<Embodiment 1>

The high-safety carbon material 1 of Preparation example 1 is used and subjected to the above step (D), in order to prepare an anode material 1 of Embodiment 1.

Specifically, the anode material 1 is made by evenly mixing 950g of high-safety carbon material 1, 30g of sodium alginate (purchased from ACROS, product number: 177772500), and 20 g of conductive additive (conductive carbon black, purchased from Timcal Co., Ltd., trade name: Super P) as the anode material. Next, the anode material is mixed with 1233g to 1438g of N-methylpyrrolidone (NMP) to form a mixed liquid, and the mixed liquid is coated on a copper foil with a thickness of 14$\mu$m, and dried at 85°C for 0.5 hours to remove NMP and water, so as to form the anode of the full battery; wherein the anode includes the copper foil and a conductive film formed on the copper foil with a thickness of 100$\mu$m to 110$\mu$m. Next, by using manual stacking, an anode, a cathode, an electrolyte, and a separator (brand: Celgard, material: PP, thickness: 20$\mu$m) are assembled into a full battery (length x width x height of 4cmx2cmx0.2cm, cell capacity 0.15Ah-0.2Ah).

On the other hand, the cathode of the full battery includes an aluminum foil as a conductive carrier and a conductive film forming on a surface of the aluminum foil. The conductive film of the cathode of the full battery includes 92.5wt% lithium nickel-cobalt-manganese oxide (LNMC, capacity $\geqq$ 150mAh/g), 2.5wt% PVDF, and 5wt% conductive carbon black (purchased from Timcal Co., Ltd., trade name: Super P). The electrolyte contains 97wt% 1.2M LiPF$_6$ solution and 1wt% vinylene carbonate and 2wt% 1,3-propane sultone (PS). The LiPF$_6$ solution includes LiPF$_6$, EC, EMC and diethyl carbonate (DEC), and a volume ratio of EC:EMC:DEC is 1:3:2. Next, a charge and discharge machine (manufacturer: Maccor, model: Series 4000) is used to carry out tests of an electric capacity retention rate and a quick charge capacity capability (quick charge conditions: charge/discharge: constant current, charge and discharge rate (C-rate): constant current/0.1C (constant current and constant voltage)) under 2C and 5C charge-discharge cycles, and the test results are shown in Table 1-Table 2 below.

<Embodiments 2-5>

Except for using the high-safety carbon materials 2-5 of Preparation examples 2-5, the full batteries of Embodiments 2-5 are obtained in the same way as in Embodiment 1. Next, in the above way, tests of an electric capacity retention rate and a quick charge capacity capability of Embodiments 2-5 are carried out, and the test results are shown in Table 1-Table 2 below.

<Comparative example 1>

Except for using the carbon material A of Reference example 1, the full battery of Comparative example 1 is obtained in the same way as in Embodiment 1. Next, in the above way, tests of an electric capacity retention rate and a quick charge capacity capability of Comparative example 1 are carried out, and the test results are shown in Table 1-Table 2 below.

[Table 1]

|  | Quick charge capacity capability under a quick charge condition of 2C | Quick charge capacity capability under a quick charge condition of 5C |
|---|---|---|
| Comparative example 1 | 56% | 38% |
| Embodiment 1 | 60% | 41% |
| Embodiment 2 | 62% | 45% |
| Embodiment 3 | 63% | 50% |

[Table 2]

|  | Electric capacity retention rate after 120 times of 5C charge-discharge cycle |
|---|---|
| Comparative example 1 | 25% |
| Embodiment 2 | 41% |

(continued)

| | Electric capacity retention rate after 120 times of 5C charge-discharge cycle |
|---|---|
| Embodiment 4 | 71% |
| Embodiment 5 | 72% |

As can be seen from the above Table 1, compared to the carbon material A of Comparative example 1 that the quick charge capacity capability under the quick charge condition of 2C is 56% (56% of the battery electric capacity can be fully charged), the high-safety carbon materials 1-3 of Embodiments 1 to 3 have the quick charge capacity capability of 60% or more under the quick charge condition of 2C. In other words, the high-safety carbon materials 1 to 3 of Embodiments 1 to 3 using chitosan to cover the carbon material have the quick charge capacity capability under the quick charge condition of 2C increased by 3% or more, or even increased by about 7%. Also, compared to the carbon material A of Comparative example 1 that the quick charge capacity capability under the quick charge condition of 5C is 38%, the high-safety carbon materials 1-3 of Embodiments 1 to 3 have the quick charge capacity capability of 40% or more under the quick charge condition of 5C, or even reaching 50%. In other words, as can be seen from the above Table 1, compared to Comparative example 1 using the carbon material A, the high-safety carbon materials 1 to 3 of Embodiments 1 to 3 using chitosan to cover the carbon material have the quick charge capacity capability under the quick charge condition of 5C increased by 3% or more, or even increased by about 12%.

Also, As can be seen from the above Table 2, under the condition of 120 times of 5C charge-discharge cycle, compared to the carbon material A of Comparative example 1 that the electric capacity retention rate is 25%, the high-safety carbon materials 2, 4 to 5 of Embodiments 2, 4 to 5 have the electric capacity retention rate of 40% or more after 120 times of 5C charge-discharge cycle, and Embodiments 4 to 5 using sulfonated chitosan have the electric capacity retention rate reaching 70% or more, which shows that the effect of using sulfonated chitosan is better than that of using chitosan.

Next, as can be seen from the above Table 2, compared to Comparative example 1 using the carbon material A, the high-safety carbon materials 4 to 5 of Embodiments 4 to 5 using sulfonated chitosan to cover the carbon material have the electric capacity retention rate increased by 40% or more after 120 times of 5C charge-discharge cycle, or even increased by about 50%.

[Heat release amount test of SEI exothermic peak]

For the above-mentioned full batteries of Comparative example 1 and Embodiments 2, 4-5, the heat release amount of the SEI exothermic peak after 120 times of 5C charge-discharge cycle (fully charged) is calculated at a heating rate of 5°C/min, and the results are sorted out in Table 3 below.

Herein, heat release amount=thermal power per unit mass integrated over time.

For example, when measuring heat release amount by DSC, since the Cp thermal power (flow) is different at T1 and T2 temperatures, the unit of Cp thermal power (flow) is J/min.g. Due to the heating rate of 5°C/min, T1 corresponds to time t1, T2 corresponds to time t2, and the heat release amount $\triangle\text{H} = \int_{t1}^{t2} Cpdt$, that is, $\triangle$H is about equal to J/g.

[Table 3]

| | Heat release amount of SEI exothermic peak after 120 times of 5C charge-discharge cycle |
|---|---|
| Comparative example 1 | 46.9J/g |
| Embodiment 2 | 7.4J/g |
| Embodiment 4 | 5.2J/g |
| Embodiment 5 | 1.8J/g |

As can be seen from the above Table 3, compared to the carbon material A of Comparative example 1 that the heat release amount is 46.9J/g, the high-safety carbon materials 2, 4 to 5 of Embodiments 2, 4 to 5 have the heat release amount of the SEI exothermic peak less than 7.5J/g after 120 times of 5C charge-discharge cycle, and the heat release amount of Embodiments 4 to 5 using sulfonated chitosan can achieve an excellent result of less than 5.5J/g, which shows that the present disclosure can greatly slow down a large amount of heat release when the SEI film decomposes.

[Accumulated irreversible efficiency (AIE) test]

For the above-mentioned full batteries of Comparative example 1 and Embodiments 4-5, the AIE test after 200 times of 0.3C charge-discharge cycle is carried out at a heating rate of 5°C/min; that is, the coulombic efficiency of each cycle is accumulated to find the total amount of lost coulombic efficiency, and the results are sorted out in Table 4 below.

[Table 4]

|  | AIE after 200 times of 0.3C charge-discharge cycle |
| --- | --- |
| Comparative example 1 | 88.8% |
| Embodiment 4 | 88.1% |
| Embodiment 5 | 77.7% |

As can be seen from the above Table 4, compared to the carbon material A of Comparative example 1 that the AIE is 88.8%, the high-safety carbon materials 4 to 5 of Embodiments 4 to 5 have the AIE less than 88.5% after 200 times of 0.3C charge-discharge cycle, and an excellent result of about 77.7% can be achieved.

[Preparation example 6]

Based on the above steps (A) to (C), the high-safety carbon material 6 of Preparation example 6 is obtained. Among them, in step (A), the weight ratio of artificial graphite:sulfonated chitosan:glutaraldehyde:the solution is 100:2:0.2:300. Also, artificial graphite uses YPG01 or CY92S graphite purchased from Taiwan CPC corporation; sulfonated chitosan is further synthesized in-house using chitosan (product number 419419) purchased from SIGMA-ALDRICH; glutaraldehyde uses the product number 49629 purchased from SIGMA-ALDRICH; the solution uses water.

[Preparation example 7]

Except for adjusting the weight ratio of artificial graphite: sulfonated chitosan:glutaraldehyde:the solution to 100:4:0.4:300, the high-safety carbon material 7 is obtained in the same way as in Preparation example 6.

[Reference example 2]

Artificial graphite is used as carbon material B of Reference example 2.

[Embodiments 6-7]

Except for using the high-safety carbon materials 6-7 of Preparation examples 6-7, the full batteries of Embodiments 6-7 are obtained in the same way as in Embodiment 1. Next, a charge and discharge machine (manufacturer: Maccor, model: Series 4000) is used to carry out an electric capacity retention rate test under 0.3C charge-discharge cycle, and the test results are shown in Table 5 below.

<Comparative example 2>

Except for using the carbon material B of Reference example 2, the full battery of Comparative example 2 is obtained in the same way as in Embodiment 1. Next, in the above way, an electric capacity retention rate test of Comparative example 2 is carried out, and the test result is shown in Table 5 below.

[Table 5]

|  | Electric capacity retention rate after 100 times of 0.3C charge-discharge cycle |
| --- | --- |
| Comparative example 2 | 89.6% |
| Embodiment 6 | 92.4% |
| Embodiment 7 | 91.6% |

As can be seen from the above Table 5, compared to the carbon material B of Comparative example 2 that the electric capacity retention rate is 89.6%, the high-safety carbon materials 6-7 of Embodiments 6-7 have the electric capacity retention rate reaching 91% or more after 100 times of 0.3C charge-discharge cycle. It can be seen that in addition to applying sulfonated chitosan (or chitosan) to soft carbon, applying sulfonated chitosan (or chitosan) to artificial graphite can also obtain the effects of improving the electric capacity retention rate and slowing down a large amount of heat release when the SEI film decomposes, etc. In addition, it can be seen from the above Table 5 that compared to Comparative example 2 using the carbon material B, the high-safety carbon materials 6-7 of Embodiments 6-7 using the carbon materials covered with sulfonated chitosan have the electric capacity retention rate increased by 2% or more after 100 times of 0.3C charge-discharge cycle, or even increased by about 3%.

[Penetration test]

<Control example 1>

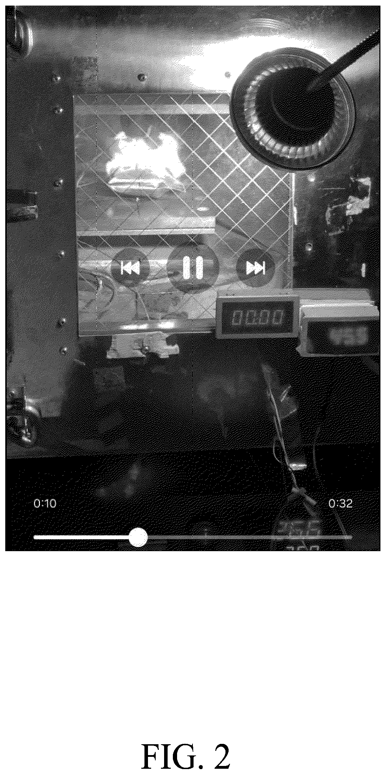

The test of SAE J2464 standard method is carried out under the conditions that a needle diameter is 3 mm, a penetration speed is 8 cm/min, and a minimum depth of penetration is penetrating the cell. Among them, in a pouch battery with an electric capacity of 1Ah, the cathode is made of $LiNi_{0.8}Mn_{0.1}Co_{0.1}O_2$ (theoretical electric capacity is 200mAh/g), the anode is made of 90wt% artificial graphite and 10wt% soft carbon, the separator is PE, and the electrolyte is the same as in the above Embodiment 1. The results of the penetration test are shown in FIG. 2. FIG. 2 shows a photo of Control example 1 after the penetration test for 10 seconds, and it can be seen that the anode of the control example 1 ignited and exploded after 10 seconds, and the result is that the penetration test is not passed.

<Experiment example 1>

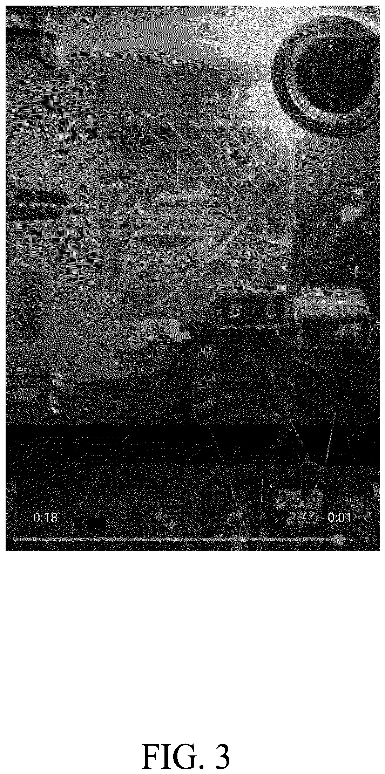

Except that the anode uses 90wt% of the high-safety carbon material 6 of Preparation example 6 and 10wt% of the high-safety carbon material 4 of Preparation example 4, the test of SAE J2464 standard method is carried out in the same way as in Control example 1. The results of the penetration test are shown in FIG. 3. FIG. 3 shows a photo of Experiment example 1 after the penetration test for 18 seconds, and it can be seen that the anode of Experiment example 1 did not ignite after 18 seconds, and the result is that the penetration test is passed.

It can be seen that whether artificial graphite is used as the substrate or soft carbon as the substrate, by cross-linking the chitosan or sulfonated chitosan with glutaraldehyde, the carbon material such as artificial graphite or soft carbon can form a stable covering A-SEI film thereon, and then the high-safety carbon material manufactured by the present disclosure can pass the penetration test.

Based on the above, through the method of the present disclosure, it is helpful to obtain a high-safety carbon material, which can slow down a large amount of heat release when the SEI film decomposes, prevent the heat generated by the decomposition of the SEI film from triggering the overall thermal runaway mechanism, and can improve the safety of anode materials used in batteries.

The present invention is not limited to the above-mentioned embodiments, and various changes may be made within the scope indicated in the claims, and the embodiments obtained by appropriately combining the technical means disclosed in the different embodiments are also included in the technical scope of the present invention.

While the present disclosure has been described by means of specific embodiments, numerous modifications and variations could be made thereto by those skilled in the art without departing from the scope and spirit of the present disclosure set forth in the claims.

**Claims**

1.  A method for manufacturing a high-safety carbon material, comprising:

    step (A), mixing a carbon material, a coating material, glutaraldehyde and a solution with a weight ratio of 100:2-6:0.2-0.6:100-300 to form a mixed slurry, wherein the carbon material is soft carbon and/or artificial graphite, and the coating material is chitosan and/or sulfonated chitosan;
    step (B), stirring the mixed slurry evenly and heating at 70°C-90°C to form an evaporated slurry;
    step (C), heating the evaporated slurry at 70°C-90°C for 24 hours or more, and then cooling to room temperature to form a high-safety carbon material.

2.  The method for manufacturing the high-safety carbon material according to claim 1, wherein after the step (C), step (D) is further comprised, the step (D) is to sieve the high-safety carbon material through a sieve of 38 microns or less and obtain undersize.

3. The method for manufacturing the high-safety carbon material according to claim 1 or 2, wherein compared to the carbon material, the high-safety carbon material has an electric capacity retention rate increased by 40% or more after 120 times of 5C charge-discharge cycle.

4. The method for manufacturing the high-safety carbon material according to claim 1 or 2, wherein the high-safety carbon material has a heat release amount of SEI exothermic peak less than 7.5J/g after 120 times of 5C charge-discharge cycle.

5. The method for manufacturing the high-safety carbon material according to claim 1 or 2, wherein the high-safety carbon material obtained by using sulfonated chitosan for step (A) has a heat release amount of SEI exothermic peak less than 5.5 J/g after 120 times of 5C charge-discharge cycle.

6. The method for manufacturing the high-safety carbon material according to claim 1 or 2, wherein compared to the carbon material, the high-safety carbon material has a quick charge capacity capability under the quick charge condition of 2C increased by 3% or more, and under the quick charge condition of 5C increased by 3% or more.

7. The method for manufacturing the high-safety carbon material according to claim 1 or 2, wherein the high-safety carbon material has accumulated irreversible efficiency (AIE) less than 88.5% after 200 times of 0.3C charge-discharge cycle.

8. The method for manufacturing the high-safety carbon material according to claim 1 or 2, wherein compared to the carbon material, the high-safety carbon material has an electric capacity retention rate increased by 2% or more after 100 times of 0.3C charge-discharge cycle.

9. The method for manufacturing the high-safety carbon material according to claim 1 or 2, wherein under the conditions that a needle diameter is 3 mm, a penetration speed is 8 cm/min, and a minimum depth of penetration is penetrating the cell, the test of SAE J2464 standard method is carried out, and a pouch battery with an electric capacity of 1Ah, composed of a cathode made of $LiNi_{0.8}Mn_{0.1}Co_{0.1}O_2$, an anode made of the high-safety carbon material can pass the penetration test.

10. The method for manufacturing the high-safety carbon material according to claim 1 or 2, wherein in the step (A), the solution is water or water containing 2vol% acetic acid.

mixing a carbon material, a coating material, glutaraldehyde and a solution with a weight ratio of 100:2-6:0.2-0.6:100-300 to form a mixed slurry, wherein the carbon material is soft carbon and/or artificial graphite, and the coating material is chitosan and/or sulfonated chitosan ⟞A

stirring the mixed slurry evenly and heating at 70°C-90°C to form an evaporated slurry ⟞B

heating the evaporated slurry at 70°C-90°C for 24 hours or more, and then cooling to room temperature to form a high-safety carbon material ⟞C

# FIG. 1

FIG. 2

FIG. 3

Europäisches
Patentamt

European
Patent Office

Office européen
des brevets

# EUROPEAN SEARCH REPORT

**Application Number**

EP 25 16 1087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/319269 A1 (SAITO TOMONORI [US] ET AL) 17 October 2019 (2019-10-17) <br> * abstract * <br> * claims 1-21 * <br> * paragraphs [0034], [0054], [0057], [0058], [0060] * | 1-10 | INV. <br> C01B32/05 <br> C01B32/21 <br> H01M4/583 <br> H01M4/587 <br> H01M10/0525 |
| A | US 2024/243287 A1 (WEN TEN-CHIN [TW] ET AL) 18 July 2024 (2024-07-18) <br> * abstract * <br> * claims 1-12 * <br> * examples 1,2 * | 1-10 | |
| A | SUGASHINI S. ET AL: "Optimization using central composite design (CCD) for the biosorption of Cr(VI) ions by cross linked chitosan carbonized rice husk (CCACR)", CLEAN TECHNOLOGIES AND ENVIRONMENTAL POLICY, vol. 15, no. 2, 1 April 2013 (2013-04-01), pages 293-302, XP093293973, Berlin/Heidelberg ISSN: 1618-954X, DOI: 10.1007/s10098-012-0512-3 * the whole document * | 1-10 | |
| A | US 2023/197953 A1 (LU CHENG-YEN [TW] ET AL) 22 June 2023 (2023-06-22) * the whole document * | 1-10 | **TECHNICAL FIELDS SEARCHED (IPC)** <br><br> C01B <br> H01M |

The present search report has been drawn up for all claims

| Place of search | Date of completion of the search | Examiner |
|---|---|---|
| The Hague | 9 July 2025 | Mertins, Frédéric |

EPO FORM 1503 03.82 (P4C01)

## ANNEX TO THE EUROPEAN SEARCH REPORT
## ON EUROPEAN PATENT APPLICATION NO.

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | Publication date | Patent family member(s) | | Publication date |
|---|---|---|---|---|
| US 2019319269 A1 | 17-10-2019 | NONE | | |
| US 2024243287 A1 | 18-07-2024 | CN | 118352522 A | 16-07-2024 |
| | | TW | 202429737 A | 16-07-2024 |
| | | US | 2024243287 A1 | 18-07-2024 |
| US 2023197953 A1 | 22-06-2023 | NONE | | |

EPO FORM P0459

For more details about this annex : see Official Journal of the European Patent Office, No. 12/82